# EUROPÄISCHE PATENTSCHRIFT

(11) **EP 3 859 923 B1**
(45) Veröffentlichungstag und Bekanntmachung des Hinweises auf die Patenterteilung: **21.05.2025**
(21) Anmeldenummer: 21153670.1
(22) Anmeldetag: 27.01.2021
(51) Int. Cl.: H02G 3/22, H01R 4/66, H01B 17/30, F16L 5/02, H01B 17/26

(54) **ERDLEITERDURCHFÜHRUNG**
EARTH CONDUCTOR FEEDTHROUGH
TRAVERSÉE DE CONDUCTEUR DE TERRE

(30) Priorität: 28.01.2020 DE 202020005158 U
(43) Veröffentlichungstag der Anmeldung: 04.08.2021
(73) Patentinhaber: Hauff-Technik GmbH & Co. KG, 89568 Hermaringen (DE)
(72) Erfinder: Delikostas, Christos, 89537 Giengen (DE); Eßwein, Thomas, 89551 Königsbronn (DE); Schmid, Jörg, 89168 Niederstotzingen (DE)
(74) Vertreter: Szynka Smorodin Patentanwälte Partnerschaft mbB

(56) Entgegenhaltungen:
- EP-A1- 2 003 757
- EP-A1- 2 899 332
- EP-A1- 3 159 901
- DE-A1- 2 726 672
- DE-B3- 10 217 979
- HAUFF TECHNIK: "Erdungen HEA-System", 15 June 2015 (2015-06-15), XP093221780, Retrieved from the Internet <URL:https://e-ordering.minusines.lu/upload/public/artikel/1750228/208006_1750228_Katalog_DE_1.pdf> [retrieved on 20241107]

## Beschreibung

Die vorliegende Erfindung betrifft eine Erdleiterdurchführung zum Einbau in ein Wand- oder Bodenelement.

Eine Erdleiterdurchführung umfasst ein metallisches Erdleiterteil, welches in das Wand- oder Bodenelement eingebaut wird und eine elektrische Verbindung zwischen dessen beiden Seitenflächen schafft. Dieser elektrische Leiter, der dann das Wand- oder Bodenelement durchsetzt, kann bspw. für eine Erdung, zum Potenzialausgleich oder für eine Blitzschutzanlage genutzt werden.

Die DE 27 26 672 A1 betrifft eine Erdleiterdurchführung, die aus einem metallischen Erdleiterteil und einem Isolatorteil aus Kunststoff aufgebaut ist, welches das Erdleiterteil einfasst. Bei einer Ausführungsform, die der vorliegenden Gliederung in Oberbegriff und Kennzeichen zugrunde liegt, ist das Erdleiterteil über einen Sicherungsstift verdrehsicher im Isolatorteil gehalten, wobei dieses auf das Erdleiterteil aufgespritzt ist.

Die EP 2 003 757 A1 betrifft ebenfalls eine Erdleiterdurchführung, die aus einem metallischen Erdleiter und einem dieses einfassenden Isolierteil aufgebaut ist.

Die EP 2 899 332 A1 betrifft eine Durchführung mit einem Rohrelement zum Einbetonieren, das nach dem Einbetonieren eine Durchgangsöffnung zum Hindurchführen einer Leitung freihält.

Die DE 102 17 979 B3 betrifft einen stabförmigen Erdleiter zum Einbetonieren, auf dem außenseitig eine Dichtung angeordnet ist.

Aus der EP 3 159 901 A1 ist eine Stangendurchführung für elektrische Geräte bzw. Transformatoren bekannt, mit welcher ein flacheisenförmiges Leiterstückstück über Isolatorteile in einer Gehäusewand montiert und dabei mit einem Sicherungsstift zusätzlich axial fixiert wird.

Der vorliegenden Erfindung liegt das technische Problem zugrunde, eine vorteilhafte Erdleiterdurchführung anzugeben.

Dies wird erfindungsgemäß mit der Durchführung gemäß Anspruch 1 gelöst. Diese weist ein Erdleiter- und ein Isolatorteil auf, wobei das Erdleiterteil in einer Durchgangsöffnung des Isolatorteils angeordnet ist. Das Isolatorteil fasst den Erdleiter nach radial außen ein (jedenfalls in einem Axialabschnitt), nach dem Einbau ist das Isolatorteil dann in Kontakt mit dem Wand- oder Bodenelement, also typischerweise dem Beton. Erfindungsgemäß ist die Durchführung ferner derart vorgesehen, dass das Erdleiterteil über einen Formschluss verdrehsicher in der Durchgangsöffnung des Isolatorteils gehalten ist.

Dies kann bspw. in der Anwendung von Vorteil sein, wenn nach dem Einbau der Durchführung eine Leitung bzw. ein Anschlussstück an dem Erdleiterteil montiert wird. Zum Herstellen einer solchen Verbindung kann das Erdleiterteil axial endseitig bspw. mit einem Eingriff versehen sein, der z. B. mit einem Innengewinde zum Einschrauben eines Anschlussstücks vorkonfektioniert sein kann. Unabhängig von dieser Ausgestaltung im Einzelnen kann das Anschrauben eines Anschlussstücks bzw. der Leitung an das Erdleiterteil bspw. dahingehend von Vorteil sein, dass sich dauerhaft zuverlässige Verbindungen erreichen lassen.

Die Erfinder haben jedoch festgestellt, dass Schraubverbindungen vielfach zu relativ großen Drehmomenten führen können. Bei der erfindungsgemäßen Durchführung ist deshalb das Erdleiterteil formschlüssig verdrehsicher im Isolatorteil gehalten. Nach der Montage wird dann das Isolatorteil seinerseits formschlüssig gehalten, und zwar vom Material des Wand- oder Bodenelements, also typischerweise vom erstarrten Beton. Im Vergleich zu dem Erdleiterteil, das die Form eines Stabs haben und radial relativ kompakt sein kann, reicht das Isolatorteil radial nach weiter außen, sodass für das Auftrennen der Verbindung zum Beton ein entsprechend größeres Drehmoment aufgebracht werden muss (vereinfachte Betrachtung zur Illustration des Prinzips). Damit lassen sich die Drehmomentwerte, mit denen am Erdleiterteil ohne die Gefahr eines Durchdrehens hantiert werden kann, insgesamt erhöhen.

Bevorzugte Ausgestaltungen finden sich in den abhängigen Ansprüchen und der gesamten Offenbarung, wobei bei der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Werden bspw. die Vorteile der Erdleiterdurchführung in einer bestimmten Anwendung beschrieben, ist dies sowohl als Offenbarung einer für die entsprechende Anwendung ausgelegten Durchführung als auch einer entsprechenden Verwendung zu lesen.

Das metallische Erdleiterteil kann bspw. aus einem Baustahl wie St 37 oder auch aus einem Edelstahl vorgesehen sein, bspw. V2A oder V4A, je nach Anforderungsprofil. Bevorzugt ist das Erdleiterteil so vorgesehen, dass es sich nach dem Einbau als unterbrechungsfrei durchgehendes Teil von der einen Seite des Wand- oder Bodenelements zur entgegengesetzten Seite erstreckt (im Allgemeinen könnte es auch aus mehreren Teilen zusammengesetzt sein). Das Erdleiterteil kann bspw. stabförmig vorgesehen sein, also in zur axialen Richtung senkrechten Schnittebenen betrachtet ein rundes, insbesondere kreisrundes Querschnittsprofil haben, jedenfalls über den größeren Teil seiner axialen Erstreckung (abschnittsweise ist z. B. zur Ausbildung des Formschlusses auch ein anderes Querschnittsprofil möglich, siehe unten im Detail). Eine Außenwandfläche des Erdleiterteils kann gummiert oder anderweitig beschichtet sein, was aber nur optional so ist.

Das Isolatorteil ist bevorzugt aus einem Kunststoffmaterial vorgesehen, bspw. einem Hartkunststoff. Es könnte im Allgemeinen auch als Thermoformteil hergestellt sein, bevorzugt handelt es sich um ein Spritzgussteil.

Erfindungsgemäß werden bzw. sind das Isolator- und das Erdleiterteil als zuvor jeweils für sich separat hergestellte Teile zusammengesetzt. Das Isolatorteil wird also bspw. spritzgegossen, danach wird es mit dem Erdleiterteil zusammengesetzt (wird dieses also in die Durchgangsöffnung eingeschoben). Das Zusammensetzen kann im Vergleich zu dem Umspritzen zwar die Zahl der einzelnen Fertigungsschritte erhöhen. Andererseits kann es jedoch z. B. eine Modularität dahingehend eröffnen, dass sich baugleiche Isolatorteile mit anwendungsabhängig unterschiedlichen Erdleiterteilen kombinieren lassen. Das Spritzgießen kann im Vergleich zum Umspritzen des Einlegeteils bereits an sich weniger aufwendig sein, zudem lassen sich auf Grundlage desselben Formwerkzeugs auch unterschiedliche Durchführungen aufbauen, bspw. zu unterschiedlichen Wanddicken passend (also mit unterschiedlich langen Erdleiterteilen).

Das mit dem Isolatorteil zusammengesetzte Erdleiterteil ist bevorzugt dagegen gedichtet, sodass Kriechpfade für Feuchtigkeit entlang der Außenwandfläche des Erdleiterteils verlängert bzw. blockiert werden. Im Allgemeinen könnte dazu in die Durchgangsöffnung des Isolatorteils bspw. auch eine gesonderte Dichtung eingelegt werden, z. B. ein Dichtring. Bevorzugt wird das Isolatorteil durch Mehrkomponenten-Spritzguss hergestellt, wobei eine Hartkomponente die Durchgangsöffnung bildet; an oder in dieser ist die Dichtung aus einer Weichkomponente angespritzt. Bei letzterer kann es sich bspw. um einen thermoplastischen Elastomer (TPE) handeln, die Hartkomponente kann bspw. Acrylnitril-Butadien-Styrol (ABS) sein.

Im Falle eines Mehrkomponenten-Spritzgussteils bilden Hart- und Weichkomponente gemeinsam das Isolatorteil; es kann aber auch eine Hartkomponente für sich das Isolatorteil bilden, etwa bei einem Einkomponenten-Spritzgussteil. Die Hartkomponente kann bspw. eine Shore-Härte (Shore D) von mindestens 40 Shore, 45 Shore bzw. 50 Shore haben, mit möglichen Obergrenzen bei bspw. 100 Shore, 90 Shore bzw. 80 Shore. Die Weichkomponente kann bspw. eine Shore-Härte (Shore A) von höchstens 70 Shore, 65 Shore bzw. 60 Shore haben, mit möglichen Untergrenzen bei bspw. mindestens 40 Shore, 45 Shore bzw. 50 Shore.

Generell beziehen sich die Angaben "axial", "radial" und "umlaufend", sowie die zugehörigen Richtungen, auf eine Längsachse der Erdleiterteildurchführung. Entlang dieser kann sich bspw. das Erdleiterteil von der einen zur anderen Seite des Wand- oder Bodenelements erstrecken, das Erdleiterteil kann um die Längsachse zumindest dreh-, vorzugsweise rotationssymmetrisch sein (jedenfalls in einem Axialabschnitt, vergleiche die Anmerkungen zur Stabform). Die Längsachse der Durchführung kann die Durchgangsöffnung im Isolatorteil bspw. mittig durchsetzen, eine die Durchgangsöffnung radial begrenzende Innenwandfläche des Isolatorteils kann um die Längsachse zumindest dreh-, vorzugsweise rotationssymmetrisch sein. Die Verdrehsicherung bezieht sich auf die Umlaufrichtung, blockiert also eine Rotation in Umlaufrichtung.

Erfindungsgemäß bildet ein mit dem Isolator- und Erdleiterteil zusammengesetztes Arretiermittel den Formschluss. Das Isolator- und das Erdleiterteil können auch bereits für sich formschlüssig aneinander anliegen (bezogen auf die Umlaufrichtung), wobei das zusätzlich eingesetzte Arretiermittel dann einem Verdrehen zusätzlich vorbeugt. Bevorzugt schafft allein das Arretiermittel die Verdrehsicherung, lässt sich das in das Isolatorteil eingesetzte Erdleiterteil also noch in der Durchgangsöffnung drehen, solange das Arretiermittel noch nicht eingesetzt ist. Das Arretiermittel wird bzw. ist in einer radialen Einsetzrichtung in seine formschlüssige, die Verdrehung zwischen Erdleiter- und Isolatorteil blockierende Anlage geschoben.

Erfindungsgemäß ist der das Erdleiterteil verdrehsicher haltende Formschluss an einer Außenwandfläche des Erdleiterteils ausgebildet. Die Außenwandfläche des Erdleiterteils, die bezogen auf die Radialrichtungen außen liegt, ist dazu zumindest in einem Axialabschnitt des Erdleiterteils profiliert (nicht kreisförmig).

Im Falle des Arretiermittels ist der Formschluss dann an einer im Schnitt betrachtet geradlinigen Profilkante des Erdleiterteils ausgebildet (die Schnittebene liegt bspw. senkrecht zur Längsachse). Das Arretiermittel kann sich dann bspw. mit einer geradlinigen Bewegung parallel zu dieser Kante aufschieben lassen, was z. B hinsichtlich des Montageaufwands von Vorteil sein kann. In dem Schnitt betrachtet bildet die Außenwandfläche des Erdleiterteils über einen Umlaufabschnitt eine gerade Linie, dort liegt das Arretiermittel an, vorzugsweise mit einer flächigen, im Schnitt ebenfalls linienförmigen Anlagefläche. Bevorzugt hat das Arretiermittel auch an dem Isolatorteil eine flächige Anlage, besonders bevorzugt liegt diese in einer gemeinsamen Ebene mit der Anlagefläche am Erdleiterteil. Im Schnitt betrachtet liegen die Anlageflächen also auf einer gemeinsamen Geraden.

Das Arretiermittel ist in bevorzugter Ausgestaltung klammerförmig vorgesehen, liegt also an zwei einander radial entgegengesetzten Außenwandflächenabschnitten des Erdleiterteils an. Diese Außenwandflächenabschnitte sind bevorzugt jeweils für sich plan, besonders bevorzugt liegen sie parallel zueinander. Im Schnitt betrachtet können die Außenwandflächenabschnitte also zwei geradlinige, zueinander parallele Kanten bilden. Das klammerförmige Arretiermittel ist dann wie ein Maulschlüssel an das Erdleiterteil gesetzt und blockiert eine Rotation relativ zum Isolatorteil.

Gemäß einer bevorzugten Ausführungsform ist axial beidseits des Arretiermittels jeweils eine Dichtung vorgesehen, welche das Erdleiter- gegen das Isolatorteil dichtet. Bevorzugt sind diese Dichtungen als Weichkomponente in einem Mehrkomponenten-Spritzgussverfahren angespritzt, siehe vorne.

Eine bevorzugte Erdleiterdurchführung weist radial außen eine Stegdichtung auf, welche beim Eingießen der Durchführung von dem Vergussmaterial des Wandelements umschlossen wird. Bevorzugt ist die Stegdichtung aus einem im Verhältnis zum Isolatorteil weicheren Material vorgesehen, besonders bevorzugt wird sie als Weichkomponente in einem Mehrkomponenten-Spritzgussverfahren gespritzt (vorzugsweise gemeinsam mit der bzw. den vorstehend erwähnten Dichtungen). Die Stegdichtung weist einen sich radial nach außen erhebenden, umlaufenden Steg auf. Dieser wird dann axial und nach radial außen vom Vergussmaterial eingefasst.

Das weiche Material der Stegdichtung kann dabei einen guten Kontakt zum Vergussmaterial herstellen bzw. aufbewahren, wenn dieses beim Aushärten schrumpft. Bevorzugt ist eine bzw. sind die Stirnseite(n) des Stegs in einem Axialschnitt betrachtet mit einem oder mehreren axial hervortretenden Vorsprüngen geformt; bevorzugt gibt es mehrere solche Vorsprünge auf unterschiedlichen Radialpositionen. Diese bilden dann mit dem erstarrten Vergussmaterial einen Hinterschnitt bezogen auf die radiale Richtung, sodass die Stegdichtung zuverlässig im Vergussmaterial gehalten ist. Wie bereits erwähnt, sollen diese Varianten ausdrücklich auch hinsichtlich einer entsprechenden Verwendung offenbart sein, bei welcher die Durchführung eingebaut wird und das Vergussmaterial die Stegdichtung umschließt.

Gemäß einer bevorzugten Ausführungsform, die ausdrücklich auch hinsichtlich der Verwendung offenbart sein soll, weist das Isolatorteil einen Blockageabschnitt auf, den das Vergussmaterial solchermaßen umschließt, dass das Isolatorteil verdrehsicher darin gehalten ist. Bevorzugt ist der Blockageabschnitt an einem Flansch des Isolatorteils vorgesehen, ist er also entsprechend radial weiter außen platziert (vorteilhaft hinsichtlich des Drehmoments, siehe vorne). Bevorzugt tritt der am Flansch angeordnete Blockageabschnitt axial hervor, bspw. in Form eines Zapfens, bevorzugt gibt es umlaufend verteilt mehrere Zapfen.

Generell ist der Flansch bevorzugt axial endseitig am Erdleiterteil vorgesehen, sodass er beim Einbau der Durchführung zur Montage an einem Schalungselement genutzt werden kann. Bevorzugt erhebt sich der Blockageabschnitt in einer Axialrichtung, die vom Erdleiterteil weg weist, erhebt er sich also axial zur Schalung hin. Bevorzugt wird der Blockageabschnitt bzw. Zapfen bei der Montage an der Schalung genutzt, wird nämlich von der der Schalung abgewandten Rückseite her ein Befestigungsmittel durch den Blockageabschnitt/Zapfen in die Schalung eingebracht, bspw. eine Schraube oder ein Nagel. Hierfür kann der Blockageabschnitt/Zapfen bevorzugt dahingehend vorkonfektioniert sein, dass er an dieser Rückseite mit einem Loch, insbesondere einem Sackloch vorgesehen ist. In dieses kann das Befestigungsmittel gesetzt und dann in die Schalung eingebracht werden.

Die dem Erdleiterteil abgewandte, also der Schalung zugewandte Vorderseite des Flansches kann in einem Axialschnitt betrachtet mit einer Stufe vorgesehen sein. Bei dieser Variante gibt es bevorzugt eine Flanschfläche radial innen, die an die Schalung angedrückt wird (mittelbar oder auch direkt, siehe unten). Mit der Stufe zurückversetzt ist dann ein radial äußerer Rand (Randabschnitt) vorgesehen, der bevorzugt vollständig umlaufend ausgebildet sein kann. Dort kann dann auch der Blockageabschnitt/Zapfen angeordnet sein, dieser kann also gegenüber dem Randabschnitt axial hervortreten, wobei sein freies Ende dann im Wesentlichen in einer Ebene mit der Flanschfläche liegen kann. Bevorzugt ist der Randabschnitt nicht nach radial außen eingefasst, sodass ihn also das Vergussmaterial axial bedeckt. Auch unabhängig von diesen Details kann der axial zurückversetzte Randabschnitt bspw. auch ein optionales Zusammensetzen mit einem weiteren Flanschkörper vereinfachen, siehe unten im Detail.

Gemäß einer bevorzugten Ausführungsform ist bzw. wird, wenn der Flansch zum Einbau der Durchführung an einer Schalung positioniert wird, an der Flanschfläche ein elastisches Material angeordnet, vorzugsweise ein Schaumstoffmaterial, z. B. Moosgummi. Das elastische Material kann bspw. gesondert an die Flanschfläche gesetzt werden, es kann aber andererseits auch als Weichkomponente angespritzt werden. Insbesondere bei letzterer Variante können auch einzelne Punkte bzw. Stege, z. B. auch umlaufende Ringe aus dem elastischen Material geformt sein, dieses kann die Flanschfläche aber andererseits auch flächig in Form einer Schicht bedecken. Das elastische Material kann bspw. die Anlage des Flansches an der Schalung verbessern, aufgrund der Federwirkung kann es auch eine gewisse Kraftbeaufschlagung erlauben (ein sattes Andrücken).

Gemäß einer bevorzugten Ausführungsform wird bzw. ist der Flansch des Isolatorteils mit einem Flanschkörper zusammengesetzt, der den Flansch nach radial außen überragt. Der Flanschkörper bildet eine dem Erdleiterteil ab- bzw. der Schalung zugewandte Flanschkörperfläche radial außerhalb der Flanschfläche des Isolatorteils. Die Flanschkörperfläche ist bevorzugt vollständig umlaufend vorgesehen, also in Umlaufrichtung unterbrechungsfrei durchgehend. Die Flanschkörperfläche kann bspw. eine jeweils von der Flanschfläche des Isolatorteils weg genommene radiale Erstreckung von mindestens 2 cm haben, was bevorzugt vollständig umlaufend gilt, also in jeder Radialrichtung.

**In** einer jeweiligen Radialrichtung kann der Flanschkörper den Flansch also bspw. um mindestens 2 cm, 3 cm, 4 cm bzw. 5 cm nach außen überragen, mögliche Obergrenzen können bspw. bei höchstens 40 cm, 30 cm bzw. 20 cm liegen. Bevorzugt wird ein entsprechender Überstand, der z. B. ein gutes Anarbeiten einer Flächenabdichtung ermöglichen kann, in jeder Radialrichtung erreicht. Der gegenüber dem Flansch nach radial außen überstehende Teil des Flanschkörpers, also die Flanschkörperfläche, ist bevorzugt umlaufend unterbrechungsfrei, also durchgehend ausgebildet. Das Anarbeiten der Flächenabdichtung kann bspw. ein Aufstreichen einer Dichtbeschichtung oder ein Aufkleben einer Dichtfolie oder dergleichen sein. Generell können die den mit dem Flansch des Isolatorteils zusammengesetzten Flanschkörper betreffenden Ausführungsformen auch unabhängig von der hauptanspruchsgemäßen formschlüssigen Verdrehsicherung zwischen Erdleiter- und Isolatorteil von Interesse sein und sollen sie entsprechend auch unabhängig davon offenbart sein. Die beschriebene Vergrößerung des Flansches durch Ansetzen des Flanschkörpers kann also generell in Verbindung mit einer Erdleiterdurchführung von Interesse sein, die ein Erdleiter- und ein Isolatorteil aufweist (das Erdleiterteil ist bevorzugt in einer Durchgangsöffnung des Isolatorteils angeordnet). Trotz der von der formschlüssigen Verdrehsicherung unabhängigen Offenbarung können dabei durchaus Kombinationen mit anderen Konkretisierungen von Interesse sein.

Der Flansch des Isolatorteils ist an seiner Vorderseite bevorzugt mit einem axial zurückversetzten Randabschnitt vorgesehen (siehe vorne), darauf sitzt dann bevorzugt der Flanschkörper auf. Die Flanschfläche des Isolatorteils und die Flanschkörperfläche können damit im Wesentlichen in einer gemeinsamen Ebene liegen. Auch unabhängig davon kann die Positionierung auf dem Randabschnitt bspw. Stabilität schaffen. Der Flanschkörper kann sich einerseits am Außenumfang des Randabschnitts und andererseits auch an der Stufenform, die zwischen innerer Flanschfläche und Randabschnitt gebildet ist, abstützen, was Stabilität schafft und bspw. einem Verkippen vorbeugen kann. Generell können der Flansch und der Flanschkörper bevorzugt gegeneinander gedichtet sein, besonders bevorzugt mit einer am Außenumfang des Randabschnitts angeordneten Dichtung. Diese kann angesetzt oder bevorzugt angespritzt sein. Die Dichtung, also das elastische Material, kann dort auch Stabilität schaffen, nämlich einen rutschfesten Sitz zwischen Flansch und Flanschkörper begünstigen.

Bevorzugt sind der Flanschkörper und das Isolatorteil, insbesondere dessen Flansch, im zusammengesetzten Zustand auch axial formschlüssig zusammengehalten. Bevorzugt ist ein Rastmittel vorgesehen, das im zusammengesetzten Zustand einen Formschluss bezüglich einer Axialrichtung bildet (in der anderen Axialrichtung gibt es bevorzugt eine Anlagefläche, vorzugsweise am Randabschnitt). Das Rastmittel ist vorzugsweise am Flanschkörper vorgesehen und hintergreift im zusammengesetzten Zustand den Randabschnitt des Flansches, liegt also an dessen Rückseite an (diese ist dem Erdleiter zu- bzw. der Schalung abgewandt).

Gemäß einer bevorzugten Ausführungsform ist der Flanschkörper mit einem Formschlusselement vorgesehen, über das er mit einem weiteren Flanschkörper formschlüssig zusammenbaubar ist, sodass mehrere Erdleiterdurchführungen modular zusammengesetzt werden können. Axial betrachtet sind die zusammengesetzten Flanschkörper nebeneinander angeordnet, bevorzugt gibt es mehrere Formschlusselemente und ist ein zeilen- und spaltenförmiges Zusammensetzen möglich (lassen sich die Flanschkörper also axial gesehen neben- und aufeinander setzen). Die formschlüssig zusammengehaltenen Flanschkörper bzw. Durchführungen sind über den Formschluss radial zusammengehalten, dies kann bspw. das Positionieren bzw. Montieren an der Schalung vereinfachen.

Der Flanschkörper hat axial gesehen bevorzugt eine Außenform mit mehreren Ecken und Kanten (ist also nicht rund), bspw. eine Viereck-, Sechseck- oder Achteckform. Die Flanschkörper sind dann bevorzugt derart zusammengesetzt, dass sie mit jeweils einer Seitenkante dieser Mehreckform aneinander anliegen (axial betrachtet).

Wie bereits mehrfach erwähnt, betrifft die Erfindung auch die Verwendung einer vorliegend offenbarten Erdleiterdurchführung, bzw. eines Moduls aus mehreren zusammengesetzten Durchführungen, zum Einbau in ein Wand- oder Bodenelement, vorzugsweise in eine Wand. Der Einbau erfolgt bevorzugt durch Eingießen mit einem zunächst fließfähigen und dann erstarrenden Vergussmaterial, vorzugsweise Beton. Dabei kann die Erdleiterdurchführung insbesondere in einer vorstehend geschilderten Weise an einer Schalung befestigt werden, die dann mit dem Beton aufgefüllt wird. Die Schalung kann anschließend wieder entfernt werden, sodass das einbetonierte Erdleiterteil von beiden Wandseiten zugänglich ist. Bevorzugt wird dann eine Leitung bzw. ein Anschlussstück an dem Erdleiterteil befestigt, insbesondere verschraubt, vergleiche auch die Anmerkungen eingangs.

Offenbart sein soll auch ein Verfahren zum Herstellen einer Erdleiterdurchführung, wobei das Isolatorteil durch Spritzgießen geformt wird. Es wird ausdrücklich auch auf die vorstehenden Angaben zu bevorzugten Herstellungsdetails verwiesen (Mehrkomponenten-Spritzguss etc.). Bevorzugt wird das Isolatorteil nach dem Spritzgießen mit dem Erdleiterteil zusammengesetzt (wir letzteres also nicht als Einlegeteil umspritzt). Bevorzugt wird dann, nach dem Zusammensetzen von Isolator- und Erdleiterteil, zur Herstellung des Formschlusses das Arretiermittel eingesetzt, besonders bevorzugt wird es radial eingeschoben.

Bevorzugt kann eine Herstellung des Arretiermittels gemeinsam mit dem Isolatorteil im selben Spritzgussvorgang sein. Besonders bevorzugt kann das Arretiermittel danach einstückig mit dem Isolatorteil vorliegen, also nicht zerstörungsfrei davon trennbar. Die beiden können bspw. aus derselben Komponente geformt sein, wobei das Arretiermittel dann abgetrennt wird, was bspw. durch eine Materialbrücke verringerter Dicke dazwischen begünstigt sein kann. Es lässt sich dann bspw. abdrehen. Im Falle des Mehrkomponenten-Spritzgießens können die beiden auch über ein aus der Weichkomponente geformtes Verbindungsstück miteinander verbunden sein. Das Arretiermittel muss dann für das formschlüssige Einsetzen mitunter gar nicht abgetrennt werden, es hängt über das Verbindungsstück aus der Weichkomponente, gewissermaßen verliersicher am Isolatorteil.

Generell können das Arretiermittel und das Isolatorteil bspw. auch aus unterschiedlichen Hartkomponenten vorgesehen bzw. geformt werden, nämlich das Arretiermittel aus einem härteren Material (das eine größere Shore-Härte hat). Das Arretiermittel kann bspw. aus PA 6 GF gegossen werden, das Isolatorteil aus ABS. Mit Blick auf die bevorzugt einstückige Herstellung ist dann insbesondere auch ein Drei-Komponenten-Spritzguss möglich, nämlich in Verbindung mit einer Weichkomponente (TPE), aus welcher unter anderem das Verbindungsstück geformt werden kann.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine erfindungsgemäße Erdleiterdurchführung im eingebauten Zustand in einem Axialschnitt;
- Figur 2: das Isolatorteil der Durchführung gemäß Figur 1 in einer Ansicht von schräg vorne;
- Figur 3: die Kombination aus Erdleiterteil und Arretiermittel der Durchführung gemäß Figur 1 in einer Schrägansicht von vorne;
- Figur 4: einen Schnitt durch Erdleiter- und Isolatorteil, die von dem Arretiermittel verdrehsicher gehalten werden;
- Figur 5: einen mit dem Flansch des Isolatorteils zusammengesetzten Flanschkörper in einer Schrägansicht von vorne;
- Figur 6: den Flanschkörper gemäß Figur 5 in einer Schrägansicht von hinten;
- Figur 7: das Isolatorteil mit Hart- und Weichkomponente in einem Axialschnitt;
- Figur 8: die Weichkomponente gemäß Figur 7 in einer Einzeldarstellung.

### Bevorzugte Ausführung der Erfindung

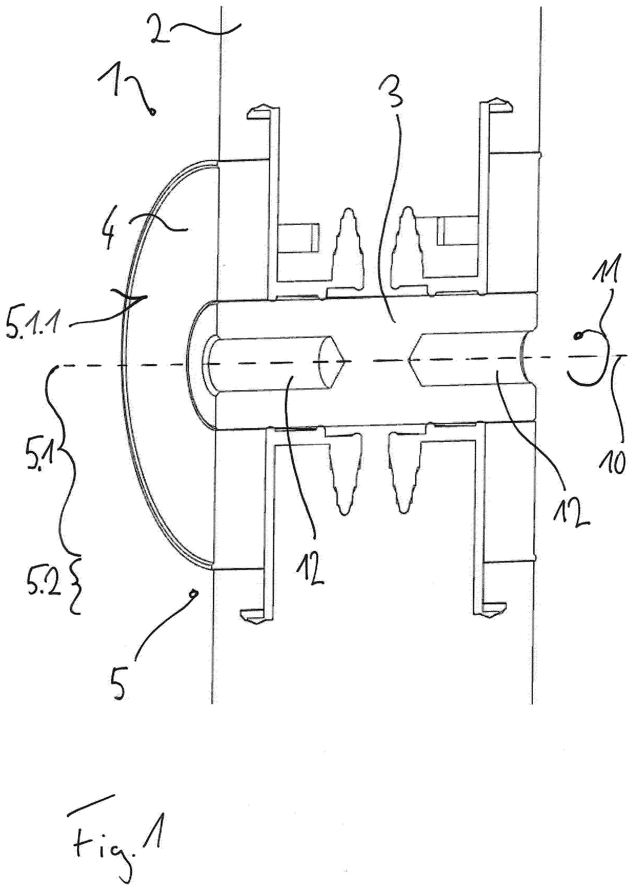

Figur 1 zeigt in einem Axialschnitt eine Erdleiterdurchführung 1, die in ein Wandelement 2 eingegossen ist. Die Erdleiterdurchführung 1 weist ein Erdleiterteil 3, vorliegend einen Stab aus Stahl, und ein Isolatorteil 4 auf. Das Isolatorteil 4 ist ein Kunststoff-Spritzgussteil, und axial entgegengesetzt ist ein weiteres baugleiches Isolatorteil auf das Erdleiterteil 3 gesetzt (gleichwohl wird im Folgenden der Einfachheit halber nur auf ein Isolatorteil Bezug genommen).

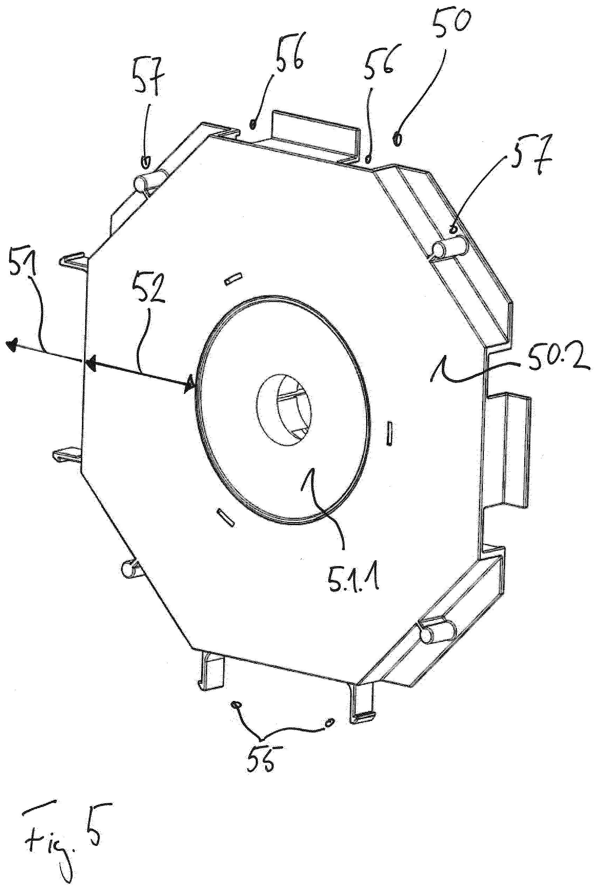

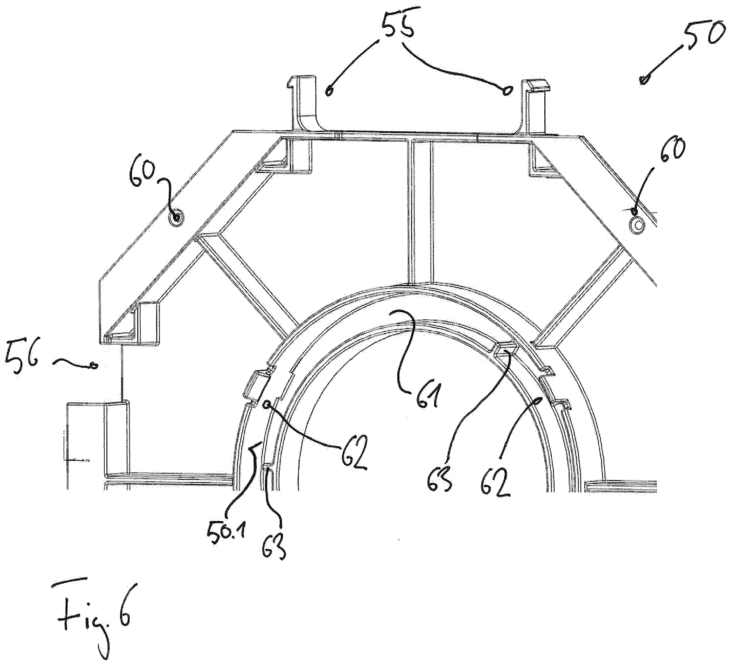

Das Isolatorteil 4 weist einen Flansch 5 auf, der in einem radial inneren Abschnitt 5.1 eine dem Erdleiterteil 3 abgewandte Flanschfläche 5.1.1 bildet. Mit dieser Flanschfläche 5.1.1 liegt die Erdleiterdurchführung 1 beim Eingießen an einem Schalungselement an, welches in der Situation gemäß Figur 1 bereits wieder entfernt wurde. Auf der Flanschfläche 5.1.1 kann bspw. ein Schaumstoffmaterial, etwa Moosgummi, angeordnet werden, um die Anlage an der Schalung zu verbessern, vergleiche die Beschreibungseinleitung. Ein Randabschnitt 5.2 des Flansches 5 wird in der Situation gemäß Figur 1 von dem Beton umschlossen, und bildet eine Verdrehsicherung (bezüglich weiterer Funktionen wird auf die Figuren 5 und 6 verwiesen).

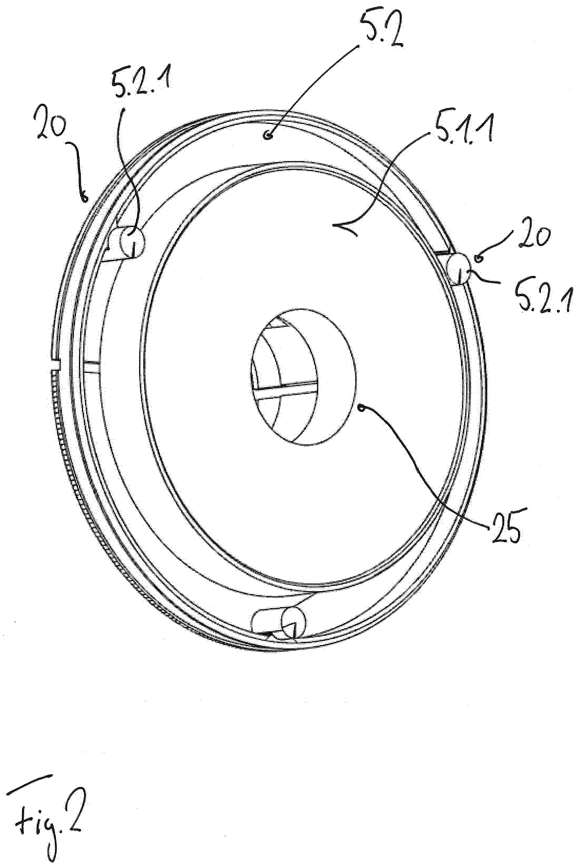

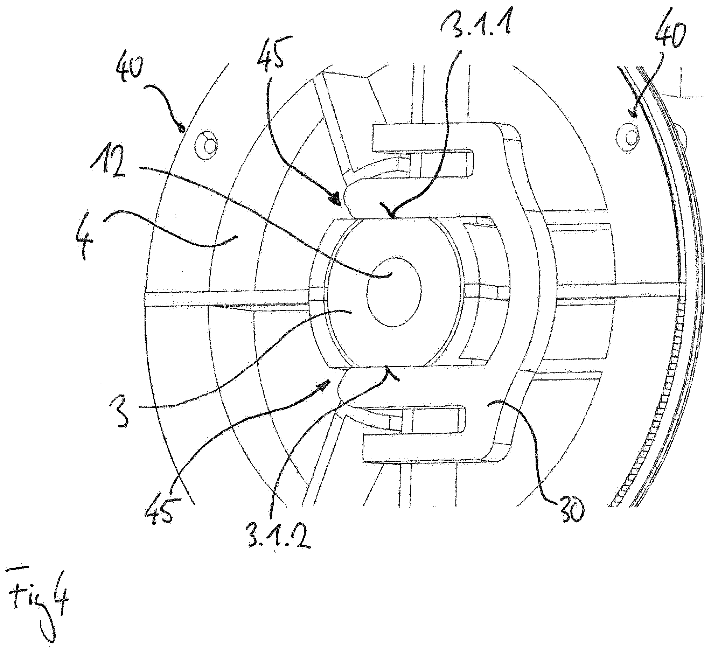

Figur 2 zeigt das Isolatorteil 4 in einer Einzeldarstellung, in einer Schrägansicht von vorne. Der Blick fällt also auf die Flanschfläche 5.1.1, ferner ist auch der axial zurückversetzte Randabschnitt 5.2 zu erkennen. Dort sind Blockageabschnitte 20 angeordnet, nämlich axial hervortretende Zapfen 5.2.1. Diese werden im eingebauten Zustand von dem Beton umschlossen (Situation gemäß Figur 1), was eine Verdrehsicherung schafft. Die Zapfen 5.2.1 dienen ferner der Montage der Durchführung 1 an der Schalung, von der Rückseite her erstreckt sich nämlich jeweils ein Loch 40 in den jeweiligen Zapfen 5.2.1 hinein, vgl. Figur 4. Durch diese Löcher 40 kann bspw. eine Schraube eingebracht und kann so das Isolatorteil 4 und damit die Durchführung 1 an der Schalung verschraubt werden. (In der Ansicht gemäß Figur 4 würden die Schrauben in die Zeichenebene hinein eingedreht werden, in der Ansicht gemäß Figur 2 treten sie dann aus den freien Enden der Zapfen 5.2.1 hervor.)

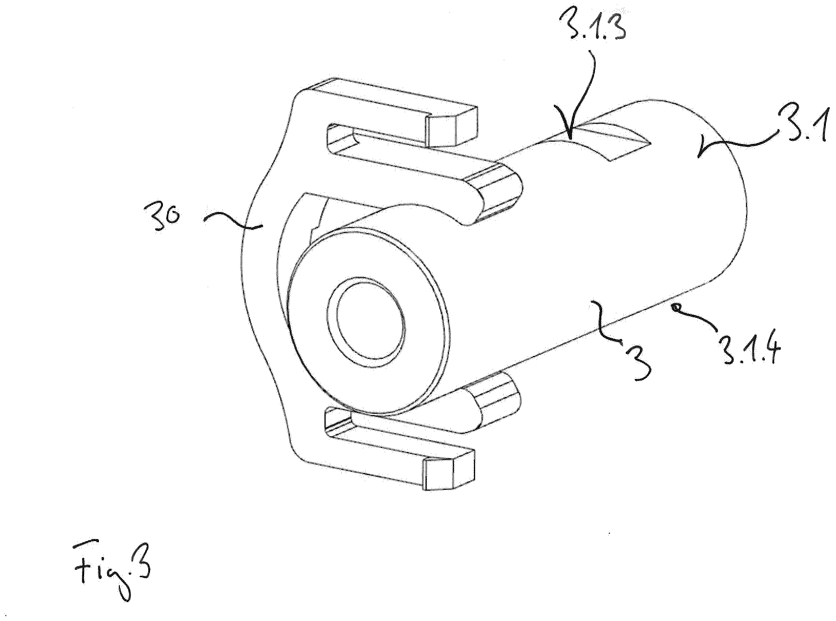

Wie aus Figur 2 ersichtlich, bildet das Isolatorteil 4 eine Durchgangsöffnung 25, in diese wird das Erdleiterteil 3 eingeschoben. Figur 3 zeigt das Erdleiterteil 3 zusammen mit einem Arretiermittel 30, nämlich einer Klammer. Des Erdleiterteil 3 wird ohne Arretiermittel 30 in die Durchgangsöffnung 25 eingeschoben, danach wird das Arretiermittel 30 aufgeschoben und damit eine Verdrehsicherung zwischen Isolatorteil 4 und Erdleiterteil 3 geschaffen. Wie aus den Figuren 3 und 4 ersichtlich, ist dazu eine Außenwandfläche 3.1 des Erdleiterteils 3 in Außenwandflächenabschnitten 3.1.1-3.1.4 jeweils plan ausgebildet. Funktional gehören die Außenwandflächenabschnitte 3.1.1 und 3.1.2 zusammen, sie schaffen eine Verdrehsicherung für das vorliegend diskutierte und in Figur 4 gezeigte Isolatorteil 4 (die Außenwandflächenabschnitte 3.1.3 und 3.1.4 betreffend das axial entgegengesetzte Isolatorteil).

Figur 4 zeigt das Isolatorteil 4, das Erdleiterteil 3 und das Arretiermittel 30, wobei das Erdleiterteil 3 in die Durchgangsöffnung 25 eingesetzt und das Arretiermittel 30 aufgeschoben ist. Damit ist ein Formschluss 45 gebildet, der Erdleiter- und Isolatorteil 3, 4 verdrehsicher hält, also bezogen auf einen Umlauf 11 um die Längsachse 10 (vergleiche Figur 1). Damit können, wenn in die endseitigen Ausnehmungen 12 des Erdleiterteils 3 Anschlussstücke (nicht dargestellt) eingeschraubt werden, auch vergleichsweise große Drehmomente aufgebracht werden, ohne dass das Erdleiterteil 3 hohl dreht. Figur 4 zeigt einen Schnitt, die Schnittebene liegt senkrecht zur Längsachse 10.

Figur 5 zeigt eine Variante, bei welcher an den Flansch 5 des Isolatorteils 4 ein zusätzlicher Flanschkörper 50 angesetzt ist. Der Flanschkörper 50 überragt die Flanschfläche 5.1.1 in den Radialrichtungen 51 nach außen (exemplarisch gezeigt für eine Radialrichtung 51). Er hat von der Flanschfläche 5.1.1 weg genommen eine radiale Erstreckung 52 von rund 10 cm, und zwar umlaufend, also in jeder Radialrichtung. Damit lässt sich bei dieser Variante gut eine Flächenabdichtung an die Durchführung 1 anarbeiten, die auf eine Seitenfläche des Wandelements 2 aufgebracht wird, bspw. eine Bitumenbeschichtung.

Der Flanschkörper 50 weist ferner Formschlusselemente 55 auf, über welche er formschlüssig mit dem Flanschkörper 50 einer weiteren Durchführung 1 zusammengesetzt werden kann. Die Formschlusselemente 55 greifen dabei in Öffnungen 56 des anderen, baugleichen Flanschkörpers 50 ein. Analog dem Flansch 5 ist auch der Flanschkörper 50 mit Blockageabschnitten 57 vorgesehen, welche der Beton umschließt und so eine Verdrehsicherung schafft.

Figur 6 zeigt den Flanschkörper 50 in einer Rückansicht, die in den zapfenförmigen Blockageabschnitten 57 angeordnete Öffnungen 60 erkennen lässt. Analog der vorstehenden Beschreibung können die Blockageabschnitte 57 also zugleich zur Befestigung des Flanschkörpers 50 und damit der Durchführung 1 an der Schalung genutzt werden. Zusätzlich zu den Formschlusselementen 55 und der Öffnung 56 ist in der Rückansicht ferner ein vom Flanschkörper 50 gebildeter Ringraum 61 zu erkennen. An bzw. in diesen wird der Randabschnitt 5.2 des Flansches 5 gesetzt, der Flansch 5 ist dann axial über Rastmittel 62 gehalten. In dem Ringraum 61 sind Stege 63 vorgesehen, die mit den Blockageabschnitten 20 bzw. Zapfen 5.2.1 des Flansches 5 eine Verdrehsicherung schaffen (zwischen Isolatorteil 4 und Flanschkörper 50).

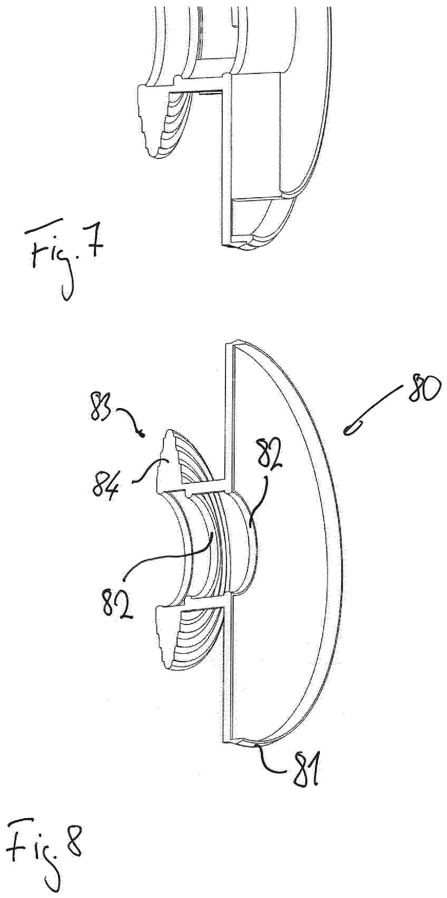

Figur 7 zeigt einen Teil des Isolatorteils 50 in einem Axialschnitt, ergänzend wird auch auf Figur 8 verwiesen, welche nur die Weichkomponente zeigt. Die Weichkomponente 80 bildet an der Außenwand des Randabschnitts 5.2 eine umlaufende Dichtung 81, diese legt sich in zusammengesetztem Zustand an die Wandfläche 50.1 des Flanschköpers 50 an (vergleiche Figur 6). Ferner bildet die Weichkomponente 80 zwei umlaufende Dichtungen 82, die im zusammengesetzten Zustand axial beidseits des Arretiermittel 30 angeordnet sind, also bspw. in der Darstellung gemäß Figur 3 vor und hinter dem Arretiermittel 30. Damit werden Kriechpfade entlang der Außenwandfläche 3.1 des Erdleiterteils 3 blockiert.

Aus der Weichkomponente 80 ist ferner eine Stegdichtung 83 geformt, die vorliegend einen Steg 84 aufweist. Dieser erhebt sich nach radial außen und umlaufend, im eingebauten Zustand wird er von dem Beton umschlossen, vergleiche Figur 1. Damit werden Kriechpfade für Feuchtigkeit entlang der Grenzfläche zwischen Beton und Durchführung 1 verlängert bzw. blockiert. Bezogen auf Figur 1 könnte unterhalb der Stegdichtung 84 noch eine Hülse angeordnet, also auf das Erdleiterteil 3 aufgeschoben sein; dies ist aber nur optional.

## Patentansprüche

1. Erdleiterdurchführung (1) zum Einbauen in ein Wand- oder Bodenelement (2), mit
einem metallischen Erdleiterteil (3),
einem Isolatorteil (4) und
einem Arretiermittel (30), das mit dem Isolatorteil (4) und dem Erdleiterteil (3) zusammengesetzt ist,
wobei das Isolatorteil (4) eine Durchgangsöffnung (25) bildet, in welcher das Erdleiterteil (3) angeordnet ist,
wobei das Erdleiterteil (3) über einen Formschluss (45) verdrehsicher bezogen auf einen Umlauf um eine Längsachse (10) der Erdleiterdurchführung (1) in der
Durchgangsöffnung (25) des Isolatorteils (4) gehalten ist,
wobei das Isolatorteil (4) und das Erdleiterteil (3) als zuvor jeweils für sich separat hergestellte Teile zusammengesetzt sind,
und wobei das Arretiermittel (30) mit einer, bezogen auf die Längsachse (10) der Erdleiterdurchführung (1), radialen Einsetzrichtung in eine die Verdrehung zwischen Erdleiterteil (3) und Isolatorteil (4) blockierende Anlage geschoben ist und den Formschluss (45) bildet,
**dadurch gekennzeichnet, dass**
der das Erdleiterteil (3) verdrehsicher haltende Formschluss (45) an einer Außenwandfläche (3.1) des Erdleiterteils (3) ausgebildet ist,
und dass die Außenwandfläche (3.1) des Erdleiterteils (3) im Bereich des Formschlusses (45) ein Profil hat, das in einem achssenkrechten Schnitt betrachtet eine geradlinige Kante bildet, an welcher das Arretiermittel (30) anliegt.

2. Erdleiterdurchführung (1) nach Anspruch 1, bei welcher das Isolatorteil (4) ein Mehrkomponenten-Spritzgussteil ist, bei welchem eine Hartkomponente die Durchgangsöffnung (25) bildet, in welcher das Erdleiterteil (3) angeordnet ist, und eine Weichkomponente (80) eine an oder in der Durchgangsöffnung (25) angeordnete Dichtung (82) bildet, welche gegen das Erdleiterteil (3) dichtet.

3. Erdleiterdurchführung (1) nach einem der vorstehenden Ansprüche, bei welcher das Arretiermittel (30) das Erdleiterteil (3) klammerförmig umgreift, also an zwei, bezogen auf eine Längsachse (10) der Erdleiterdurchführung (1), einander radial entgegengesetzten Auswandflächenabschnitten (3.1.1, 3.1.2) des Erdleiterteils (3) anliegt.

4. Erdleiterdurchführung (1) nach einem der vorstehenden Ansprüche, bei welcher, bezogen auf eine Längsachse (10) der Erdleiterdurchführung (1), axial beidseits des Arretiermittels (30) jeweils eine Dichtung (82) vorgesehen ist, welche das Erdleiterteil (3) gegen das Isolatorteil (4) dichtet, und/oder die eine Stegdichtung (83) aufweist, an welche sich bei einem Eingießen der Erdleiterdurchführung (1) ein Vergussmaterial anlegt.

5. Erdleiterdurchführung (1) nach einem der vorstehenden Ansprüche, bei welcher das Isolatorteil (4) einen Blockageabschnitt (20) aufweist, der bei einem Eingießen der Erdleiterdurchführung (1) von einem Vergussmaterial umschlossen wird und das Isolatorteil (4) verdrehsicher in dem Vergussmaterial hält, wobei der Blockageabschnitt (20, 5.2.1) bevorzugt an einem Flansch (5) des Isolatorteils ausgebildet ist und, bezogen auf eine Längsachse (10) der Erdleiterdurchführung (1), axial hervortritt.

6. Erdleiterdurchführung (1) nach einem der vorstehenden Ansprüche, bei welcher das Isolatorteil (4), bezogen auf eine Längsachse (10) der Erdleiterdurchführung (1), axial endseitig einen Flansch (5) mit einer Flanschfläche (5.1.1) aufweist, die in einer Axialrichtung von dem Erdleiterteil (3) weg weist, wobei an der Flanschfläche (5.1.1) ein elastisches Material angeordnet ist, vorzugsweise ein Schaumstoffmaterial.

7. Erdleiterdurchführung (1) nach einem der vorstehenden Ansprüche, bei welcher, jeweils bezogen auf eine Längsachse (10) der Erdleiterdurchführung (1), das Isolatorteil (4) axial endseitig einen Flansch (5) aufweist, wobei an den Flansch (5) ein Flanschkörper (50) angesetzt ist, der den Flansch (5) nach radial außen überragt.

8. Erdleiterdurchführung (1) nach Anspruch 7, bei welcher der Flanschkörper (50) eine Flanschkörperflanschfläche (50.1.1) aufweist, die in einer Axialrichtung von dem Erdleiterteil (3) weg weist, wobei die Flanschkörperflanschfläche (50.2) radial von einer Flanschfläche des Isolatorteils (4) weg genommen eine Erstreckung von mindestens 2 cm hat.

9. Erdleiterdurchführung (1) nach Anspruch 7 oder 8, bei welcher der Flanschkörper (50) und das Isolatorteil (4) von einem Rastelement (62) axial formschlüssig zusammengehalten werden, welches Rastelement (62) an den Flanschkörper (50) oder an das Isolatorteil (4) angeformt ist.

10. Erdleiterdurchführung (1) nach einem der Ansprüche 6 bis 9, bei welcher der Flanschkörper (50) radial außenseitig ein Formschlusselement (55) aufweist, über welches die Erdleiterdurchführung (1) mit einem weiteren Flanschkörper (50) formschlüssig zusammenbaubar ist.

11. Verwendung einer Erdleiterdurchführung (1) nach einem der vorstehenden Ansprüche zum Einbauen in ein Wand- oder Bodenelement (2) und zum Anschließen einer Leitung an das Erdleiterteil (3).

## Claims

1. Ground conductor bushing (1) for installation in a wall or floor element (2), comprising
a metallic ground conductor part (3),
an insulator part (4) and
a locking means (30) which is assembled with the insulator part (4) and the ground conductor part (3),
wherein the insulator part (4) forms a passage opening (25) in which the ground conductor part (3) is arranged,
wherein the ground conductor part (3) is held in the passage opening (25) of the insulator part (4) in a manner secured against rotation in relation to a revolution about a longitudinal axis (10) of the ground conductor bushing via a form fit (45),
wherein the insulator part (4) and the ground conductor part (3) are assembled as separately produced parts beforehand in each case,
and wherein the locking means (30) is pushed with a radial insertion direction, in relation to the longitudinal axis (10) of the ground conductor bushing (1), into an abutment blocking the rotation between the ground conductor part (3) and the insulator part (4) and forms the form fit (45),
**characterized in that**
the form fit (45) holding the ground conductor part (3) in a manner secured against rotation is formed on an outer wall surface (3.1) of the ground conductor part (3),
and **in that** the outer wall surface (3.1) of the ground conductor part (3) has, in the region of the form fit (45), a profile which, as viewed in a section perpendicular to the axis, forms a straight edge against which the locking means (30) bears.

2. Ground conductor bushing (1) according to Claim 1, in which the insulator part (4) is a multi-component injection-moulded part, in which a hard component forms the passage opening (25) in which the ground conductor part (3) is arranged, and a soft component (80) forms a seal (82) which is arranged on or in the passage opening (25) and which seals against the ground conductor part (3).

3. Ground conductor bushing (1) according to one of the preceding claims, in which the locking means (30) engages around the ground conductor part (3) in the manner of a clamp, that is to say bears against two wall surface sections (3.1.1, 3.1.2) of the ground conductor part (3) which are radially opposite one another in relation to a longitudinal axis (10) of the ground conductor bushing (1).

4. Ground conductor bushing (1) according to one of the preceding claims, in which, in relation to a longitudinal axis (10) of the ground conductor bushing (1), a respective seal (82) is provided axially on both sides of the locking means (30) and seals the ground conductor part (3) against the insulator part (4), and/or which has a web seal (83) against which a grouting material bears when the ground conductor bushing (1) is cast in.

5. Ground conductor bushing (1) according to one of the preceding claims, in which the insulator part (4) has a blocking section (20) which is surrounded by a grouting material when the ground conductor bushing (1) is cast in and holds the insulator part (4) in a manner secured against rotation in the grouting material, wherein the blocking section (20, 5.2.1) is preferably formed on a flange (5) of the insulator part and projects axially in relation to a longitudinal axis (10) of the ground conductor bushing (1).

6. Ground conductor bushing (1) according to one of the preceding claims, in which the insulator part (4), in relation to a longitudinal axis (10) of the ground conductor bushing (1), has a flange (5) with a flange surface (5.1.1) on the axial end side, which flange surface points away from the ground conductor part (3) in an axial direction, wherein an elastic material, preferably a foam material, is arranged on the flange surface (5.1.1).

7. Ground conductor bushing (1) according to one of the preceding claims, in which, in each case in relation to a longitudinal axis (10) of the ground conductor bushing (1), the insulator part (4) has a flange (5) on the axial end side, wherein a flange body (50) which projects radially outwards beyond the flange (5) is attached to the flange (5).

8. Ground conductor bushing (1) according to Claim 7, in which the flange body (50) has a flange body flange surface (50.1.1) which points away from the ground conductor part (3) in an axial direction, wherein the flange body flange surface (50.2), taken radially away from a flange surface of the insulator part (4), has an extent of at least 2 cm.

9. Ground conductor bushing (1) according to Claim 7 or 8, in which the flange body (50) and the insulator part (4) are held together in an axially form-fitting manner by a latching element (62), which latching element (62) is integrally formed on the flange body (50) or on the insulator part (4).

10. Ground conductor bushing (1) according to one of Claims 6 to 9, in which the flange body (50) has, radially on the outer side, a form-fitting element (55) via which the ground conductor bushing (1) can be assembled in a form-fitting manner with a further flange body (50).

11. Use of a ground conductor bushing (1) according to one of the preceding claims for installation in a wall or floor element (2) and for connecting a line to the ground conductor part (3).

## Revendications

1. Traversée de conducteur de terre (1) destinée à être montée dans un élément de paroi ou de sol (2), comprenant
une partie de conducteur de terre métallique (3),
une partie d'isolateur (4) et
un moyen d'arrêt (30) qui est composé avec la partie d'isolateur (4) et de la partie de conducteur de terre (3),
la partie d'isolateur (4) formant une ouverture de passage (25) dans laquelle est disposée la partie de conducteur de terre (3),
la partie de conducteur de terre (3) étant maintenue dans l'ouverture de passage (25) de la partie d'isolateur (4) de manière bloquée en rotation par rapport à une rotation autour d'un axe longitudinal (10) de la traversée de conducteur de terre par le biais d'une liaison par complémentarité de forme (45), la partie d'isolateur (4) et la partie de conducteur de terre (3) étant composées en tant que parties fabriquées séparément auparavant respectivement en soi,
et le moyen d'arrêt (30) étant poussé avec une direction d'insertion radiale par rapport à l'axe longitudinal (10) de la traversée de conducteur de terre (1) dans un appui bloquant la rotation entre la partie de conducteur de terre (3) et la partie d'isolateur (4) et formant la liaison par complémentarité de forme (45),
**caractérisé en ce que**
la liaison par complémentarité de forme (45) maintenant la partie de conducteur de terre (3) de manière bloquée en rotation est réalisée au niveau d'une surface de paroi extérieure (3.1) de la partie de conducteur de terre (3),
et **en ce que** la surface de paroi extérieure (3.1) de la partie de conducteur de terre (3) a, dans la région de la liaison par complémentarité de forme (45), un profil qui, vu dans une coupe perpendiculaire à l'axe, forme une arête rectiligne au niveau de laquelle s'applique le moyen d'arrêt (30).

2. Traversée de conducteur de terre (1) selon la revendication 1, dans laquelle la partie d'isolateur (4) est une pièce moulée par injection à plusieurs composants, dans laquelle un composant dur forme l'ouverture de passage (25) dans laquelle est disposée la partie de conducteur de terre (3), et un composant souple (80) forme un joint d'étanchéité (82) disposé au niveau de ou dans l'ouverture de passage (25), lequel joint d'étanchéité assure l'étanchéité contre la partie de conducteur de terre (3).

3. Traversée de conducteur de terre (1) selon l'une quelconque des revendications précédentes, dans laquelle le moyen d'arrêt (30) entoure la partie de conducteur de terre (3) en forme de pince, c'est-à-dire s'applique au niveau de deux sections de surface de paroi (3.1.1, 3.1.2) de la partie de conducteur de terre (3) opposées radialement l'une à l'autre par rapport à un axe longitudinal (10) de la traversée de conducteur de terre (1).

4. Traversée de conducteur de terre (1) selon l'une quelconque des revendications précédentes, dans laquelle, par rapport à un axe longitudinal (10) de la traversée de conducteur de terre (1), respectivement un joint d'étanchéité (82) est prévu axialement des deux côtés du moyen d'arrêt (30), lequel joint d'étanchéité assure l'étanchéité de la partie de conducteur de terre (3) contre la partie d'isolateur (4), et/ou qui présente un joint d'étanchéité à nervure (83) au niveau duquel un matériau de scellement s'applique lors d'un coulage de la traversée de conducteur de terre (1).

5. Traversée de conducteur de terre (1) selon l'une quelconque des revendications précédentes, dans laquelle la partie d'isolateur (4) présente une section de blocage (20) qui est entourée par un matériau de scellement lors d'un coulage de la traversée de conducteur de terre (1) et maintient la partie d'isolateur (4) de manière bloquée en rotation dans le matériau de scellement, la section de blocage (20, 5.2.1) étant réalisée de préférence au niveau d'une bride (5) de la partie d'isolateur et faisant saillie axialement par rapport à un axe longitudinal (10) de la traversée de conducteur de terre (1).

6. Traversée de conducteur de terre (1) selon l'une quelconque des revendications précédentes, dans laquelle la partie d'isolateur (4) présente, par rapport à un axe longitudinal (10) de la traversée de conducteur de terre (1), du côté de l'extrémité axialement, une bride (5) avec une surface de bride (5.1.1) qui est tournée dans une direction axiale à l'opposé de la partie de conducteur de terre (3), un matériau élastique, de préférence un matériau en mousse, étant disposé au niveau de la surface de bride (5.1.1).

7. Traversée de conducteur de terre (1) selon l'une quelconque des revendications précédentes, dans laquelle, respectivement par rapport à un axe longitudinal (10) de la traversée de conducteur de terre (1), la partie d'isolateur (4) présente du côté de l'extrémité axialement une bride (5), un corps de bride (50) étant appliqué au niveau de la bride (5), lequel corps de bride fait saillie radialement vers l'extérieur de la bride (5).

8. Traversée de conducteur de terre (1) selon la revendication 7, dans laquelle le corps de bride (50) présente une surface de bride de corps de bride (50.1.1) qui est tournée dans une direction axiale à l'opposé de la partie de conducteur de terre (3), la surface de bride de corps de bride (50.2) présentant, prise radialement à l'opposé d'une surface de bride de la partie d'isolateur (4), une étendue d'au moins 2 cm.

9. Traversée de conducteur de terre (1) selon la revendication 7 ou 8, dans laquelle le corps de bride (50) et la partie d'isolateur (4) sont maintenus ensemble axialement par engagement par correspondance de forme par un élément d'encliquetage (62), lequel élément d'encliquetage (62) est formé au niveau du corps de bride (50) ou au niveau de la partie d'isolateur (4).

10. Traversée de conducteur de terre (1) selon l'une quelconque des revendications 6 à 9, dans laquelle le corps de bride (50) présente radialement du côté extérieur un élément d'engagement par correspondance de forme (55), par le biais duquel la traversée de conducteur de terre (1) peut être assemblée par engagement par correspondance de forme avec un autre corps de bride (50).

11. Utilisation d'une traversée de conducteur de terre (1) selon l'une quelconque des revendications précédentes pour le montage dans un élément de paroi ou de sol (2) et pour le raccordement d'une ligne à la partie de conducteur de terre (3).
